# EUROPÄISCHE PATENTANMELDUNG

(11) **EP 4 502 560 A1**
(43) Veröffentlichungstag der Anmeldung: **05.02.2025**
(21) Anmeldenummer: 23188566.6
(22) Anmeldetag: 31.07.2023
(51) Int. Cl.: G01J 3/02, G01J 3/10, G01J 3/12, G02B 5/20, G01J 1/04, G01J 3/44, G01N 21/65

(54) **OPTISCHE FILTERANORDNUNG MIT KONTINUIERLICH INTENSITÄTSEINSTELLBAREM TRANSMISSIONSSPEKTRUM, DETEKTOR UND PHOTOMETER**

(71) Anmelder: Siemens Aktiengesellschaft, 80333 München (DE)
(72) Erfinder: Harr, Konstantin, 76133 Karlsruhe (DE); Heffels, Camiel, 76297 Stutensee-Büchig (DE)
(74) Vertreter: Siemens Patent Attorneys

(57) **Zusammenfassung**

Die Erfindung betrifft eine optische Filteranordnung (30) zum Filtern eines einfallenden Strahlenbündels (15). Diese umfasst eine Lichtquelle (11) und ein optisches Kombinationsfilter (10) mit zumindest einem ersten Filterelement (12) mit einem ersten Transmissionsspektrum (41) und einem zweiten Filterelement (14) mit einem zweiten Transmissionsspektrum (42). Erfindungsgemäß ist die optische Filteranordnung (30) dazu ausgebildet, zu einem Einstellen eines Gesamttransmissionsspektrums (35) des Kombinationsfilters (10) zumindest einen auf dem ersten Filterelement (12) einfallenden ersten Anteil (21) des einfallenden Strahlenbündels (15) vorgebbar einzustellen. Die Erfindung betrifft ebenso einen Detektor (80) mit einer solchen optischen Filteranordnung (30) und ein Photometer (85), das mit einem derartigen Detektor (80) ausgestattet ist. Ferner betrifft die Erfindung ein Verfahren zum Simulieren eines Betriebsverhaltens einer derartigen optischen Filteranordnung (30) und ein dazu ausgebildetes Simulationsprogrammprodukt (90).

## Beschreibung

Die Erfindung betrifft eine optische Filteranordnung mit einem kontinuierlich intensitätseinstellbarem Transmissionsspektrum. Die Erfindung betriff ebenso einen Detektor, der mit einer solchen Filteranordnung ausgestattet ist, und ein damit versehenes Photometer. Weiter betrifft die Erfindung ein Verfahren zum Simulieren eine Betriebsverhaltens einer derartigen optischen Filteranordnung und eine dazu ausgebildetes Simulationsprogrammprodukt.

Aus der Europäischen Patentanmeldung EP 0 205 050 A2 ist ein Photometer für ein simultanes Messen mehrerer Wellenlängen bekannt. Das Photometer weist einen zirkulär veränderlichen Filter auf, an dem schwenkbar Radialarme befestigt sind. An Endbereichen der Radialarme sind gegenüberliegend Lichtleitfasern angebracht. Aus einer Lichtleitfaser emittiertes Licht durchläuft den zirkulär veränderlichen Filter und erreicht die gegenüberliegende Lichtleitfaser. Darüber wird das Licht einem Erfassungsmittel zugeführt. Über ein Einstellen der Positionen der Radialarme ist eine Mehrzahl an Wellenlängen gleichzeitig erfassbar.

Photometer werden in einer Vielzahl an Anwendungen in der Analytik eingesetzt. Es besteht die Zielsetzung, die Zusammensetzung und/oder Eigenschaftsparameter wie eine Dichte, einen Stoffgruppengehalt, beispielsweise Gesamtschwefel, einen Brennwert oder einen Wobbe-Index, zunehmend komplexer Stoffproben schnell und präzise zu erfassen. Unter anderem wird angestrebt, eine erhöhte Anzahl an Stoffproben-Komponenten gleichzeitig zu erfassen. Weiter besteht die Zielsetzung, dass entsprechende Photometer kompakt, einfach und kosteneffizient sein sollen. Der Erfindung liegt die Aufgabenstellung zugrunde eine Möglichkeit bereitzustellen, die in zumindest einem der skizzierten Aspekte eine Verbesserung bietet.

Die Aufgabenstellung wird durch eine erfindungsgemäße optische Filteranordnung gelöst, die zu einem Filtern eines einfallenden Strahlenbündels ausgebildet ist. Die optische Filteranordnung umfasst eine Lichtquelle, durch die das zu filternde Strahlenbündel emittiert wird. Die Lichtquelle kann beispielsweise eine Messkammer sein, in der eine auf ihre Zusammensetzung zu untersuchende Stoffprobe bestrahlt wird und infolgedessen entsprechend angeregtes Licht emittiert. Die optische Filteranordnung umfasst weiter ein optisches Kombinationsfilter, auf das das Strahlenbündel einfällt. Das Strahlenbündel bildet im Wesentlichen eine Fläche, auf der dessen Lichtstrahlen auf das optische Kombinationsfilter einfallen. Zum optischen Kombinationsfilter gehört zumindest ein erstes Filterelement, das ein erstes Transmissionsspektrum aufweist, und ein zweites Filterelement, das ein zweites Transmissionsspektrum aufweist. Das erste und zweite Transmissionsspektrum sind hierbei unterschiedlich, also nicht identisch. Die Transmissionsspektren bestimmen jeweils, welcher Wellenlängenbereich vom entsprechenden Filterelement durchgelassen wird. Beim Betrieb der optischen Filteranordnung fällt ein erster Anteil des Strahlenbündels auf das erste Filterelement ein und ein zweiter Anteil auf das zweite Filterelement. Erfindungsgemäß ist die optische Filteranordnung dazu ausgebildet, zumindest den ersten Anteil des Strahlenbündels, der auf das erste Filterelement einfällt, vorgebbar einzustellen. Das Vorgeben des zumindest ersten Anteils kann hierbei durch einen Benutzer, eine Wertetabelle und/oder einen Algorithmus, beispielsweise als Teil eines Computerprogrammprodukts, erfolgen. Durch das Vorgeben zumindest des ersten Anteils des Strahlenbündels auf dem ersten Filterelement ist ein Gesamttransmissionsspektrum des Kombinationsfilters einstellbar. Je höher der erste Anteil ist, der auf das erste Filterelement einfällt, umso höher ist die Intensität des Lichts des Strahlenbündels, das das erste Filterelement passiert. Folglich wird zumindest der zweite Anteil des Strahlenbündels, der das zweite Filterelement passiert, verringert, und somit auch die Intensität des Lichts des Strahlenbündels, das das zweite Filterelement passiert. Dementsprechend ist die optische Filteranordnung dazu ausgebildet, einen Einfall des Strahlenbündels auf das Kombinationsfilter lokal vorzugeben, also dessen Einfallsposition. Die sich hieraus ergebenden Anteile des Strahlenbündels geben dadurch die Intensitätsverteilung im Gesamttransmissionsspektrum des Kombinationsfilters vor.

Dementsprechend sind das erste und zweite Transmissionsspektrum durch die erfindungsgemäße optische Filteranordnung in puncto Intensität, insbesondere in puncto relativer Intensität, in vorgebbarer Weise einstellbar. Beispielsweise können die Intensitäten der Transmissionsspektren dadurch angeglichen werden. Ein Erfassungsmittel, das das erste und zweite Transmissionsspektrum nach der optischen Filteranordnung erfasst, kann infolgedessen an die zu erwartende maximale Intensität angepasst ausgewählt werden. Dadurch kann unabhängig von einer Intensitätsverteilung über das Wellenlängenspektrum des Strahlenbündels die Intensitätsverteilung im Gesamttransmissionsspektrum vorgegeben werden. Starke Unterschiede in der Intensität im ersten und zweiten Transmissionsspektrum, und eine Auswahl entsprechend stark unterschiedlich empfindlicher Erfassungsvorrichtungen werden vermieden. Dementsprechend ist mit der erfindungsgemäßen optischen Filteranordnung ein Detektor herstellbar, bei dem die Verwendung von mehreren separaten und besonders empfindlichen Erfassungsvorrichtungen sowie deren aufwendige Signalverarbeitung entbehrlich ist. Ein derartiger Detektor wiederum ist in besonders kosteneffizienter Weise herstellbar. Ferner wird bei der erfindungsgemäßen optischen Filteranordnung ein Verdecken im Strahlengang des Strahlenbündels vermieden, wodurch das gesamte Strahlenbündel technisch nutzbar bleibt. Dadurch ist in einfacher Weise beim Erfassen der Zusammensetzung der Stoffprobe ein erhöhtes Maß an Messgenauigkeit erreichbar. Ebenso ist ein erhöhtes Maß an Messgenauigkeit für einen Eigenschaftsparameter der Stoffprobe erzielt werden, beispielsweise für deren Dichte, einen Stoffgruppenhalt wie Gesamtschwefel, ihren Brennwert oder ihren Wobbe-Index. Des Weiteren sind Toleranzen der Lichtquelle und unterschiedliche spektrale Empfindlichkeiten der Empfangsvorrichtung durch die erfindungsgemäße optische Filteranordnung kompensierbar, wodurch eine erhöhte Messgenauigkeit erzielbar ist.

In einer Ausführungsform der beanspruchten optischen Filteranordnung sind die Lichtquelle und/oder zumindest eines der Filterelemente des Kombinationsfilters zu einer Relativbewegung zueinander ausgebildet. Durch die Relativbewegung ist vorgebbar, welcher Anteil der vom Strahlenbündel bestrahlten Fläche auf das erste bzw. zweite Filterelement trifft. Die Lichtquelle bzw. das zumindest eine Filterelement können folglich vorgebbar beweglich ausgebildet sein. Korrespondierend zur Relativbewegung, also der Bewegung der Lichtquelle bzw. des zumindest einen Filterelements, ist der erste Anteil des Strahlenbündels, der auf das erste Filterelement einfällt, kontinuierlich vorgebbar. Eine Erhöhung des ersten Anteils führt dabei unmittelbar zu einem Rückgang des zweiten Anteils. Die Genauigkeit, mit der der erste Anteil, und infolgedessen auch der zweite Anteil oder auch gegebenenfalls ein dritter, vierter, usw. Anteil vorgebbar ist, ist lediglich durch die entsprechende Positioniergenauigkeit bei der Relativbewegung begrenzt. Alternativ oder ergänzend können die Lichtquelle und zumindest das erste Filterelement starr zueinander befestigt sein. Korrespondierend wird die Genauigkeit, mit der der erste Anteil vorgebbar ist, durch die Positioniergenauigkeit bei der Herstellung der optischen Filteranordnung begrenzt. Dadurch wird insgesamt eine erhöhte Genauigkeit beim Vorgeben zumindest des ersten Anteils erzielt. Die Genauigkeit bei der Bestimmung eines Eigenschaftsparameters kann durch die Positioniergenauigkeit der optischen Filteranordnung und den Durchmesser des Strahlenbündels auf der optischen Filteranordnung beliebig gesteigert werden. Dementsprechend kann ein Erfassungsmittel in puncto zulässigem Intensitätsbereich mit reduzierten Reserven ausgelegt werden. Das technische Potential eines Erfassungsmittels, das in Kombination mit der beanspruchten optischen Filteranordnung eingesetzt wird, wird so weiter ausgeschöpft. Weiter kann zwischen dem Kombinationsfilter und dem Erfassungsmittel eine Linse und/oder ein Spiegel, insbesondere ein Hohlspiegel, angeordnet sein um das Strahlenbündel, das das Kombinationsfilter passiert, auf das Erfassungsmittel zu fokussieren.

Des Weiteren kann die beanspruchte Filteranordnung über zumindest einen Spiegel, insbesondere einen vorgebbar beweglichen Spiegel, verfügen. Der Spiegel ist dazu ausgebildet, das Strahlenbündel umzulenken. Durch den Spiegel ist ebenfalls präzise vorgebbar, wo das Strahlenbündel auf dem Kombinationsfilter einfällt, und wie hoch der erste Anteil ist, der auf dessen erstes Filterelement einfällt. Durch die Verwendung eines Spiegels können das Kombinationsfilter und die Lichtquelle ortsfest befestigt sein. Die Anzahl beweglicher Teile wird so in der optischen Filteranordnung reduziert, und so eine erhöhte Robustheit erzielt. Der Spiegel kann beabstandet zur Lichtquelle und zum Kombinationsfilter positioniert sein, was eine vereinfachte Wartung bzw. vereinfachten Austausch des Spiegels erlaubt. Der Spiegel kann weiter alternativ auch mit einer beweglichen Lichtquelle und/oder einem Kombinationsfilter mit zumindest einem beweglichen ersten Filterelement kombiniert werden.

Darüber hinaus können das erste und zweite Filterelement benachbart zueinander angeordnet sein. Insbesondere können das erste und zweite Filterelement an einer Stoßkante aneinander liegend angeordnet sein. Je kleiner eine Naht zwischen dem ersten und zweiten Filterelement ist, umso geringer ist der von der Naht absorbierte Anteil des Strahlenbündels und umso höher ist der technisch nutzbare Anteil des Strahlenbündels. Durch an unmittelbare Aneinanderliegen an der Stoßkante erreicht, steigt der zweite Anteil im gleichen Maß an wie der erste Anteil abnimmt, wenn die Einfallposition des Strahlenbündels quer zur Stoßkante angepasst wird, und umgekehrt. Die technischen Vorzüge der beanspruchten optischen Filteranordnung sind dadurch in erhöhtem Maße erzielbar. Die Herstellung der optischen Filteranordnung kann durch Abscheidung von Filterschichten für die jeweiligen Filterelemente mittels einer Maske oder durch Aufbringen von Streifenfilterelementen auf einem transparaenten Substrat kostengünstig erfolgen.

In einer weiteren Ausführungsform der beanspruchten optischen Filteranordnung verfügt diese auch über ein drittes Filterelement mit einem dritten Transmissionsspektrum und/oder ein viertes Filterelement mit einem vierten Transmissionsspektrum. Analog kann die optische Filteranordnung auch über weitere Filterelemente mit entsprechenden Transmissionsspektren verfügen. Die beanspruchte Filteranordnung ist in puncto Komplexität skalierbar und auch dafür geeignet, eine Vielzahl an unterschiedlichen Transmissionsspektren mit angepassten Intensitäten aus dem Strahlenbündel herauszufiltern, die infolgedessen auch im Wesentlichen gleichzeitig erfassbar und auswertbar sind. Ein Detektor, der mit der beanspruchten optischen Filteranordnung ausgestattet ist, verfügt somit über eine gesteigerte Messdynamik. Insbesondere kann die Echtzeitfähigkeit des Detektors durch zumindest das dritte, vierte, usw. Filterelement erhöht werden.

Ferner können in der beanspruchten optischen Filteranordnung das erste und zweite Filterelement zusammen eine erste Filtergruppe bilden. Das dritte und vierte Filterelement können zusammen eine zweite Filtergruppe bilden. Die erste und zweite Filtergruppe können aneinander liegend angeordnet sein, also zueinander benachbart. Dabei liegt ein Kontaktbereich zwischen der ersten und zweiten Filtergruppe vor, wo Filterelemente der jeweils anderen Filtergruppe benachbart zueinander positioniert sind. Die erste und zweite Filtergruppe können entlang des Kontaktbereichs relativ zueinander beweglich ausgebildet sein. Beispielsweise können die erste und zweite Filtergruppe jeweils in einer entsprechenden Stellung eine Kante bilden. Die Kanten können aneinander anliegen, so dass die erste und zweite Filtergruppe entlang ihrer Kanten zueinander beweglich sind. Das erste und zweite Filterelement der ersten Filtergruppe können zueinander entlang eines Kontaktbereichs beweglich sein, der durch aneinander liegende Kanten des ersten und zweiten Filterelements definiert ist. Der Kontaktbereich zwischen dem ersten und zweiten Filterelement ist dabei nicht-parallel, vorzugsweise diagonal oder senkrecht zum Kontaktbereich zwischen der ersten und zweiten Filtergruppe angeordnet. Das dritte und vierte Filterelement können korrespondierend zum ersten und zweiten Filterelement relativ zueinander beweglich ausgebildet sein. Dadurch sind in vorteilhafter Weise durch Bewegen der Filterelemente der erste, zweite, dritte und vierte Anteil vorgebbar, auf denen das Strahlenbündel einfällt. Insgesamt wird dadurch eine einfache optische Filteranordnung verwirklicht, mit der das Transmissionsspektrum von mindestens vier Wellenlängenbereichen in puncto Intensität, also relativer Intensität, einstellbar sind.

In einer weiteren Ausführungsform der beanspruchten optischen Filteranordnung ist das Kombinationsfilter einstückig ausgebildet. Dazu können zumindest zwei der Filterelement, bevorzugt sämtliche Filterelemente, des Kombinationsfilters stoffschlüssig miteinander verbunden. Alternativ oder ergänzend können die Filterelemente auf einem gemeinsamen Substrat ausgebildet sein, beispielsweise durch ein geeignetes Druckverfahren. Derartige Kombinationsfilter sind kompakt ausgebildet und weisen an den Stoßkanten der Filterelemente Nähte von minimierter Breite auf. Zumindest eines der Filterelemente kann eine Fassung aufweisen, die mit einem anderen Filterelement oder einer Fassung des anderen Filterelements verbunden ist. Dadurch wird ein für die weitere Auswertung unbrauchbarer Anteil der vom Strahlenbündel bestrahlten Fläche minimiert. Die Einfallsposition kann bei optischen Filteranordnungen mit einstückigem Kombinationsfilter durch ein Umlenken des Strahlenbündels mit zumindest einem Spiegel oder durch Ausrichten der Lichtquelle vorgebbar. Alternativ oder ergänzend kann das Kombinationsfilter als Ganzes vorgebbar beweglich ausgebildet sein. Alternativ kann zumindest eines der Filterelemente aus einer Mehrzahl an streifenförmigen Filterelementen hergestellt sein, die auf einem transparenten Substrat aufgebracht sein können. Ebenso können die Filterelemente durch Abscheidung auf einem transparenten Substrat hergestellt sein.

Darüber hinaus kann das Kombinationsfilter in der beanspruchten optischen Filteranordnung einen Zentralbereich aufweisen, in dem zumindest das erste, zweite und dritte Filterelement aneinander anliegen. Insbesondere kann im Zentralbereich jedes Filterelement bereichsweise zu jeden anderen Filterelement benachbart angeordnet sein. Beispielsweise können die Filterelement im Zentralbereich ein regelmäßiges oder unregelmäßiges Strahlenmuster ausbilden. Hierdurch sind die Intensitäten der jeweiligen Wellenlängenbereiche in einer breiten Spanne an Möglichkeiten relativ zueinander vorgebbar.

Des Weiteren können die Filterelemente, die zum Kombinationsfilter gehören, als aneinander liegende Kreissegmente oder als aneinander liegende Keilstücke ausgebildet sein. Derartige Filterelemente sind in einfacher Weise mit erhöhter Präzision herstellbar und können somit ein geometrisches Muster bilden, bei dem Leerräume zwischen den Filterelementen vermieden werden. Hierdurch wird eine besonders exakte Aufteilung der vom Strahlenbündel bestrahlten Anteile ermöglicht. Ein derartiges Kombinationsfilter weist eine reduzierte Anzahl an Bauteilen auf und ist in einfacher Weise bedienbar.

Ferner kann die beanspruchte optische Filteranordnung einen Kollimator aufweisen, über des das Strahlenbündel bereitgestellt wird. Der Kollimator kann, entlang der Ausbreitungsrichtung des Strahlenbündels, vor dem Kombinationsfilter angeordnet sein. Dadurch ist ein im Wesentlichen senkrechter Lichteinfall auf das Kombinationsfilter gewährleistet. Je kollimierter der Lichteinfall auf das Kombinationsfilter erfolgt, umso besser ist das Gesamttransmissionsspektrum definiert. Ferner wird durch Schrägstellung der optischen Filteranordnung hervorgerufene Verschiebung Verzerrung des Transmissionsspektrums vermieden. Das technische Potential der optischen Filteranordnung wird so weiter ausgeschöpft.

Bei der beanspruchten optische Filteranordnung können das erste, zweite, dritte, vierte, usw. Filterelement jeweils als Kurzpassfilter, als Langpassfilter, als Bandpassfilter, als Notch-Filter, oder als Spiegel ausgebildet sein. Die jeweiligen Filterelemente sind dazu geeignet, in ihrer Filterfunktion in puncto Wellenlängenbereich beliebig zu filtern. Das Kombinationsfilter kann dadurch jede beliebige Zusammenstellung als Filterelementen umfassen und dadurch zum separaten Ausfiltern beliebiger Wellenlängenbereiche eingesetzt werden. Das Kombinationsfilter, und damit die beanspruchte optische Filteranordnung, ist dadurch für eine breite Spanne an Einsatzzwecken auslegbar. Dadurch sind Stoffproben in jeglicher beliebig komplexen Zusammensetzung schnell analysierbar.

Die oben beschriebene Aufgabenstellung wird durch einen erfindungsgemäßen Detektor gelöst, der zum Erfassen eines einfallenden Strahlenbündels ausgebildet ist. Der Detektor umfasst eine optische Filteranordnung, durch die das Strahlenbündel filterbar ist. Zum Detektor gehört ebenso zumindest ein Erfassungsmittel, das mit der optischen Filteranordnung gekoppelt ist. Insbesondere kann das Erfassungsmittel, entlang der Ausbreitungsrichtung des Strahlenbündels betrachtet, hinter dem Kombinationsfilter angeordnet sein. Das Erfassungsmittel ist derart positioniert, dass zumindest ein Anteil eines Gesamttransmissionsspektrums der optischen Filteranordnung erfassbar ist. Erfindungsgemäß ist die optische Filteranordnung gemäß einer der oben dargestellten Ausführungsformen ausgebildet. Die Merkmale der optischen Filteranordnung sind ohne Weiteres auf den beanspruchten Detektor übertragbar. Der Detektor erlaubt es in besonders einfacher Weise, eine durch die Anzahl an Filterelementen des Kombinationsfilters vorgegebene Anzahl an Wellenlängenbereichen zu filtern. Die Intensitäten der korrespondierenden Wellenlängenbereiche im Gesamttransmissionsspektrum des Kombinationsfilters sind dabei einstellbar. Dementsprechend ist das Erfassungsmittel an den Spektralbereich und verfügbaren Intensitäten anpassbar. Das technische Potential der Erfassungsmittel, beispielsweise einem sogenannten Photomultiplier, oder Single-Photon-Avalanche-Dioden, insbesondere mit einem Photonenzählmodus, kurz SPAD-Dioden, genannt, ist dadurch stärker ausnutzbar. Dies erlaubt eine schnellere und präzisere Messung einer Zusammensetzung einer Stoffprobe, die mit dem Detektor analysiert wird.

Gleichermaßen wird die eingangs dargelegte Aufgabe durch ein erfindungsgemäßes Photometer gelöst. Das Photometer ist zum Ermitteln einer Zusammensetzung einer Stoffprobe ausgebildet und umfasst eine Messkammer, in der die Stoffprobe bei einem Messbetrieb aufnehmbar ist. Die Messkammer ist weiter dazu ausgebildet, durch Bestrahlen der darin aufgenommenen Stoffprobe eine Lichtemission hervorzurufen, die von der Stoffprobe ausgeht, beispielsweise eine Raman-Streuung oder laserinduzierte Fluoreszenz. Die Messkammer ist mit einem Detektor gekoppelt, der dazu ausgebildet ist, die Lichtemission aufzunehmen und anhand dessen die Zusammensetzung der Stoffprobe zu ermitteln. Der Detektor kann dazu ausgebildet sein, die Lichtemission als Strahlenbündel bereitzustellen, beispielsweise mittels eines Kollimators. Erfindungsgemäß ist der Detektor gemäß einer der oben skizzierten Ausführungsformen ausgebildet. Die Merkmale des Detektors, und damit auch der zugehörigen optischen Filteranordnung, sind folglich auf das Photometer ohne Weiteres übertragbar. Das Photometer kann beispielsweise als Raman-Photometer ausgebildet sein. Ein derartiges Photometer erlaubt eine schnelle Analyse von Stoffproben mit einer komplexen Zusammensetzung. Dadurch ist das Photometer auch zur Verwendung in volatilen chemischen Prozessen, also mit Stoffgemischen mit schnell veränderlicher Zusammensetzung, geeignet.

Des Weiteren wird die oben skizzierte Aufgabenstellung durch ein erfindungsgemäßes Einstellverfahren für eine optische Filteranordnung gelöst, die in einem Detektor einsetzbar ist, der zu einem Photometer gehört. Das Einstellverfahren umfasst einen ersten Schritt, in dem die optische Filteranordnung bereitgestellt wird und auf diese ein Strahlenbündel gelenkt wird, das durch ein Bestrahlen der Stoffprobe, beispielsweise in einer Messkammer, erzeugt wird. Das Strahlenbündel umfasst somit Lichtstrahlung mit Wellenlängen, die charakteristisch sind für die Stoffprobe. Die Stoffprobe, die im ersten Schritt eingesetzt wird, ist hierbei eine Kalibrier-Stoffprobe, die Stoffproben-Komponenten in bekannten Konzentrationen enthält.

Ebenso umfasst das Einstellverfahren einen zweiten Schritt, in dem zumindest eine erste Intensität des ersten Anteils des Strahlenbündels mit einem ersten Erfassungsmittel erfasst wird. Das erste Erfassungsmittel ist dazu ausgebildet und angeordnet, den ersten Anteil des Strahlenbündels zu erfassen, der ein erstes Filterelement eines Kombinationsfilters der optischen Filteranordnung passiert. Weiter wird im zweiten Schritt ein Sollwert für die erste Intensität vorgegeben.

Das erfindungsgemäße Einstellverfahren umfasst ferner einen dritten Schritt, in dem eine Einfallsposition des Strahlenbündels auf dem Kombinationsfilter vorgegeben wird. Das Vorgeben kann durch einen Benutzer oder einen Algorithmus erfolgen, der Teil eines Computerprogrammprodukts sein kann. Durch ein Variieren der Einfallposition wird die erste Intensität variiert, bis die erste Intensität den ersten Sollwert betragsmäßig erreicht. Der erste Sollwert kann beispielsweise durch einen Messbereich des zugehörigen ersten Erfassungsmittels vorgegeben sein. Das Variieren kann beispielsweise durch ein Ansteuern bzw. ein Bewegen eines Spiegels, also einer seiner Drehachsen, durch ein Bewegen des Kombinationsfilters und/oder ein Bewegen der Lichtquelle erfolgen. Das Ansteuern erfolgt hierbei durch ein Betätigen entsprechender Antriebsmittel. Das Bewegen des Spiegels, des Kombinationsfilters und/oder der Lichtquelle kann mittels eines Antriebsmittels oder von Hand durchgeführt werden. In einem vierten Schritt des Einstellverfahrens wird die durch Variieren im dritten Schritt ermittelte Einfallposition des Strahlenbündels als Betriebsparameter an eine Steuereinheit vorgegeben und/oder die optische Filteranordnung in einer entsprechenden Stellung fixiert werden. Der Betriebsparameter kann die Einfallsposition unmittelbar umfassen und/oder einen Satz von Stellungen des bzw. der entsprechenden Antriebsmittel. Nach Abschluss des vierten Schritts ist ein Messbetrieb mit der optischen Filteranordnung einleitbar, also ein Erfassen von Zusammensetzungen von Stoffproben, die keine Kalibrier-Stoffproben sind. Das beschriebene Einstellverfahren kann an einer optischen Filteranordnung nach einer der oben beschriebenen Ausführungsformen durchgeführt werden, das in einem oben skizzierten Detektor eingesetzt ist, der wiederum zu einem beanspruchten Photometer gehört. Die Merkmale der beanspruchten optischen Filteranordnung, des beanspruchten Detektors und des beanspruchten Photometers sind folglich auf das beanspruchte Einstellverfahren übertragbar. Das beanspruchte Einstellverfahren erlaubt es, in einfacher Weise eine optische Filteranordnung einzustellen. Das Variieren der Einfallposition des Strahlenbündels ist durch eine eindimensionale oder zweidimensionale Parameter-Variation umsetzbar, was wiederum mit einem Minimum an Rechenaufwand umsetzbar ist. Dadurch ist eine angestrebte Einstellung, also der bzw. die notwendigen Betriebsparameter, schnell selbsttätig ermittelbar. Die Inbetriebnahme eines entsprechend ausgestatteten Photometers wird hierdurch insgesamt vereinfacht.

In einer Ausführungsform des beanspruchten Einstellverfahrens können die beschriebenen Schritte analog auch für einen zweiten, dritten, vierten, usw. Anteil des Kombinationsfilters durchgeführt werden. Dadurch ist maximal mit einer zweidimensionalen Parameter-Variation der Einfallposition eine optische Filteranordnung mit einem komplexen Kombinationsfilter selbsttätig durchführbar.

Analog wird die zugrundeliegende Aufgabe durch ein erfindungsgemäßes Computerprogrammprodukt zum Einstellen einer optischen Filteranordnung gelöst, die in einem Detektor eines Photometers einsetzbar ist. Das Computerprogrammprodukt ist dazu ausgebildet, durch Steuerbefehle Antriebsmittel zu betätigen, durch die eine Einfallposition eines Strahlenbündels vorgebbar ist, das auf einen Kombinationsfilter der optischen Filteranordnung einfällt. Weiter ist das Computerprogrammprodukt dazu ausgebildet, Messsignale von zumindest einem ersten Erfassungsmittel zu empfangen, mit dem eine Intensität eines ersten Anteils des Strahlenbündels erfasst wird, der ein erstes Filterelement des Kombinationsfilters passiert. Erfindungsgemäß ist das Computerprogrammprodukt dazu ausgebildet, ein Einstellverfahren nach einer der oben dargestellten Ausführungsformen durchzuführen. Die Merkmale des beanspruchten Einstellverfahrens sind folglich auf das Computerprogrammprodukt übertragbar.

Ferner wird die Aufgabenstellung durch eine Steuereinheit gelöst, die zu einem Ansteuern von Antriebsmittels ausgebildet ist, mit denen ein Kombinationsfilter einer optischen Filteranordnung, eine Drehachse eines Spiegels und/oder eine Lichtquelle beweglich ist. Die Steuereinheit verfügt über eine Recheneinheit und eine Speichereinheit, durch die ein Computerprogrammprodukt ausführbar ist. Erfindungsgemäß ist das Computerprogrammprodukt nach einer der oben dargestellten Ausführungsformen ausgebildet. Die Merkmale des Computerprogrammprodukts sind auf die Steuereinheit übertragbar.

Die oben skizzierte Aufgabenstellung wird ebenso durch ein erfindungsgemäßes Verfahren zum Simulieren eines Betriebsverhaltens einer optischen Filteranordnung gelöst. Das Verfahren umfasst einen ersten Schritt, in dem ein Datensatz bereitgestellt wird, durch den eine Funktionsweise zumindest eines Teils der zu simulierenden Filteranordnung nachstellbar ist. Insbesondere kann der Datensatz ein digitales Abbild der optischen Filteranordnung umfassen, also deren Aufbau darstellen. Dies kann eine Größe, Lage und Form von Filterelementen eines Kombinationsfilters umfassen. Alternativ oder ergänzend kann der Datensatz eine Angabe über die Transmissionsspektren einzelner Filterelemente umfassen.

Weiter umfasst das erfindungsgemäße Verfahren ein Vorgeben zumindest einer Betriebsbedingung, die das zu simulierende Betriebsverhalten charakterisiert. Die Betriebsbedingung kann ein Emissionsspektrum eines Strahlenbündels umfassen, mit dem das Kombinationsfilter in einem bestimmungsgemäßen Betrieb bestrahlt wird. Das Emissionsspektrum kann eine Angabe über eine Intensitätsverteilung über ein Wellenlängenspektrum des Strahlenbündels umfassen. Alternativ oder ergänzend kann eine Einfallsposition des Strahlenbündels auf dem Kombinationsfilter zu den Betriebsbedingungen gehören. Die Einfallsposition kann beispielsweise durch eine Angabe über eine Position des Kombinationsfilters, zumindest eines seiner Filterelement, und/oder einer Stellung eines Spiegels, mit dem das Strahlenbündel umlenkbar ist, mittelbar vorgegeben sein. Ebenso gehört ein dritter Schritt zum beanspruchten Verfahren, in dem ein Simulationsprogrammprodukt ausgeführt wird, mit dem der im ersten Schritt bereitgestellte Datensatz in Kombination mit der im zweiten Schritt vorgegebenen zumindest einen Betriebsbedingung verarbeitet wird. Das Simulationsprogrammprodukt ist dazu ausgebildet, das Betriebsverhalten der optischen Filtereinrichtung anhand des Datensatzes und der zumindest einen Betriebsbedingung nachzustellen. Hierbei wird zumindest ein Betriebskennwert ermittelt. Der Betriebskennwert kann beispielsweise eine Intensitätsverteilung in einem Gesamttransmissionsspektrum des Kombinationsfilters sein. Anhand der Intensitätsverteilung des Gesamttransmissionsspektrums können beispielsweise Erfassungsmittel, die zu einem Detektor gehören, in dem die optische Filteranordnung angeordnet ist, parametriert und/oder kalibriert werden. Das Simulationsprogrammprodukt, das im dritten Schritt eingesetzt wird, kann als sogenannter Digitaler Zwilling ausgebildet sein, wie beispielsweise in der Druckschrift US 2017/286572 A1 näher beschrieben. Der Offenbarungsgehalt von US 2017/286572 A1 wird durch Verweisung in die vorliegende Anmeldung miteinbezogen.

Weiter gehört ein vierter Schritt zum erfindungsgemäßen Verfahren, bei dem der im dritten Schritt ermittelte zumindest eine Betriebskennwert an einen Benutzer und/oder eine Datenschnittstelle ausgegeben wird. Die Datenschnittstelle ist dazu geeignet, Resultate des oben dargestellten Verfahrens an andere simulationsgerichtete Computerprogramme auszugeben. Erfindungsgemäß ist die optische Filteranordnung, die durch das Verfahren simuliert wird, gemäß einer der oben beschriebenen Ausführungsformen ausgebildet. Die Merkmale der optischen Filteranordnung sind dementsprechend auf das beanspruchte Verfahren, insbesondere die darin simulierte optische Filteranordnung, übertragbar.

Das mit dem Kombinationsfilter erzielte Gesamttransmissionsspektrum, also auch die daran geknüpfte Intensitätsverteilung, hängt im Wesentlichen vom Aufbau des Kombinationsfilters und der Einfallposition des gefilterten Strahlenbündels ab. Die Einfallposition des Strahlenbündels auf dem Kombinationsfilter ist durch ein Simulieren einer Lage des Kombinationsfilters und/oder einer Simulation eines Strahlengangs, also einer Ausbreitung, des Strahlenbündels einfach ermittelbar. Das Ermitteln der Einfallposition des Strahlenbündels sowie dessen Durchmessers sind mit einem Minimum an Rechenaufwand durchführbar und können zumindest teilweise algebraisch erfolgen. Die Intensitätsverteilung im Strahlenbündel kann über dessen Querschnitt ohne Einbuße an Genauigkeit als homogen angenommen und modelliert werden. Die Filterwirkungen der einzelnen Filterelemente wiederum sind ebenfalls in relativ einfacher Weise simulierbar, beispielsweise als Floor-Funktionen und/oder Ceiling-Funktionen. Die Intensitätsverteilung, die sich beim Bestrahlen des Kombinationsfilters einstellt, ist wiederum durch ein Ermitteln der vom Strahlenbündel bestrahlten Anteile der einzelnen Filterelemente ermittelbar. Dies ist im Wesentlichen durch eine Flächenermittlung umsetzbar und ist ebenfalls mit relativ geringer Rechenleistung schnell implementierbar. Folglich ist das Gesamttransmissionsspektrum des Kombinationsfilters mit reduziertem Rechenaufwand simulierbar, und damit die zu erwartenden Messsignale von zugehörigen Erfassungsmitteln vorhersagbar. Gleichzeitig ist hierbei eine erhöhte Genauigkeit, also Realitätstreue, erzielbar. Das Betriebsverhalten der zugrundeliegenden optischen Filteranordnung ist mittels des beanspruchten Verfahrens somit in leistungsfähiger Weise nachstellbar. Insbesondere ist mit dem beanspruchten Verfahren eine echtzeitfähige Simulation der zugrundeliegenden optischen Filteranordnung erreichbar. Hierdurch ist ein damit ausgestatteter Detektor anhand des beanspruchten Verfahrens auf Vorliegen eines bestimmungswidrigen Betriebszustand überwachbar, also eine vorliegende erfasste Zusammensetzung der Stoffprobe, plausibilisierbar.

Die eingangs beschriebene Aufgabenstellung wird auch durch ein erfindungsgemäßes Simulationsprogrammprodukt gelöst. Das Simulationsprogrammprodukt ist dazu ausgebildet, ein Betriebsverhalten einer optischen Filteranordnung zu simulieren. Erfindungsgemäß ist das Simulationsprogrammprodukt gemäß einer der oben skizzierten Ausführungsformen ausgebildet. Das Simulationsprogrammprodukt erlaubt es, das Betriebsverhalten der optischen Filteranordnung leistungsfähig und erlaubt ein realitätstreues Nachstellen des Betriebsverhaltens. Die Merkmale des zugrundeliegenden Verfahrens sind ohne Weiteres auf das Simulationsprogrammprodukt übertragbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die einzelnen Merkmale der in den Figuren gezeigten Ausführungsformen auch untereinander und mit den oben skizzierten Merkmalen kombinierbar. Es zeigen im Einzelnen:
- FIG 1: einen schematischen Aufbau einer ersten Ausführungsform des beanspruchten Detektors, auf dem das beanspruchte Einstellverfahren durchgeführt wird;
- FIG 2: einen schematischen Aufbau einer zweiten Ausführungsform des beanspruchten Detektors, auf dem das beanspruchte Einstellverfahren durchgeführt ist;
- FIG 3: einen schematischen Aufbau einer dritten Ausführungsform des beanspruchten Detektors, auf dem das beanspruchte Einstellverfahren durchgeführt wird.

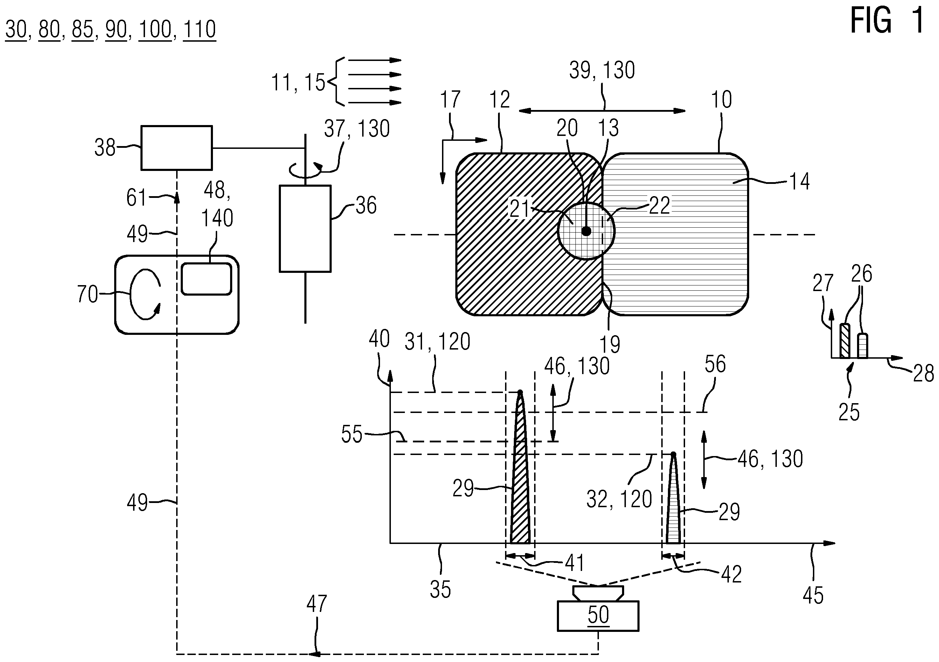

In FIG 1 ist schematisch eine erste Ausführungsform des beanspruchten Detektors 80 dargestellt, der über eine beanspruchte optische Filteranordnung 30 verfügt. Der Detektor 80 dient dazu, eine Zusammensetzung 27 einer Stoffprobe 25 zu ermitteln, die eine Mehrzahl an Stoffproben-Komponenten 26 aufweist. Dazu wird die Stoffprobe 25 angestrahlt und zu einer Lichtemission angeregt, die charakteristisch für ihre Zusammensetzung 27 ist. Die nicht näher gezeigte Lichtemission wird durch einen nicht näher gezeigten Kollimator als Strahlenbündel 15 bereitgestellt. Dadurch liegt eine Lichtquelle 11 vor, die dazu ausgebildet ist, die optische Filteranordnung anzustrahlen. Die optische Filteranordnung 30 umfasst einen Kombinationsfilter 10, auf den das Strahlenbündel 15 einfällt. Das Kombinationsfilter 10 umfasst ein erstes Filterelement 12 und ein zweites Filterelement 14, die an einer Stoßkante 19 aneinander liegend angeordnet sind. Das erste und zweite Filterelement 12, 14 sind unlösbar, also nicht zerstörungsfrei lösbar, miteinander verbunden, so dass das Kombinationsfilter 10 einstückig ausgebildet ist. Das erste Filterelement 12 weist ein erstes Transmissionsspektrum 41 auf, in dem es für das Strahlenbündel 15 transparent ist. Analog weist das zweite Filterelement 14 ein zweites Transmissionsspektrum 14 auf, in dem es für das Strahlenbündel 15 transparent ist. Die Transmissionsspektren 41, 42, sind in FIG 1 entlang einer Wellenlängenachse 45 dargestellt. Das Strahlenbündel 15 fällt auf das Kombinationsfilter 10 in einer bestrahlten Fläche 20 ein, der einen ersten Anteil 21 umfasst, der auf dem ersten Filterelement 12 liegt, und einen zweiten Anteil 22, der auf dem zweiten Filterelement 14 liegt. Die Lage der bestrahlten Fläche 20 ist durch eine Einfallposition 13 bestimmt, die in FIG 1 exemplarisch als Kreismittelpunkt dargestellt ist. In Abhängigkeit von einer Intensität des Strahlenbündels 15 im ersten Transmissionsspektrum 41 und der Größe des ersten Anteils 21 ergibt sich eine erste Intensität 31 im ersten Transmissionsspektrum 41. Je höher der erste Anteil 21 ist, umso höher ist die erste Intensität 31. Analog ist eine zweite Intensität 32 im zweiten Transmissionsspektrum 42 umso höher, je höher der zweite Anteil 22 ist. Die Intensitäten 31, 32 sind in FIG 1 schematisch entlang einer vertikalen Intensitätsachse 40 dargestellt. Die Intensitäten 31, 32 in den Transmissionsspektren 41, 42 bilden zusammen ein Gesamttransmissionsspektrum 35 des Kombinationsfilters 10.

Das Strahlenbündel 15 wird über einen Spiegel 36 auf das Kombinationsfilter 10 gelenkt, der um zumindest eine Drehachse 37 vorgebbar drehbar ist. Dazu ist der Spiegel 36 mit einem geeigneten Antriebsmittel 38, beispielsweise einem Motor, gekoppelt. Über den Spiegel 36, und damit über das Antriebsmittel 38, ist die Einfallposition 13 des Strahlenbündels 15 auf dem Kombinationsfilter 10 vorgebbar. Dies erfolgt somit als eine Relativbewegung 39 zwischen dem Strahlenbündel 15 und dem Kombinationsfilter 10. Die Relativbewegung 39 ist in einem kombinationsfilter-festen Koordinatensystem 17 beschreibbar.

Der Detektor 80 umfasst weiter ein Erfassungsmittel 50, das dazu ausgebildet und angeordnet ist, den ersten und zweiten Anteil 21, 22 des Strahlenbündels 15 zu erfassen. Das Erfassungsmittel 50 ist dazu ausgebildet, im ersten Transmissionsspektrum 41 eine vorliegende erste Intensität 31 und im zweiten Transmissionsspektrum 42 eine zweite Intensität 32 zu erfassen. Das Erfassungsmittel 50 ist als Photomultiplier oder als SPAD-Sensorausgebildet. Weiter ist das Erfassungsmittel 50 über eine kommunikative Datenverbindung 49 mit einer Steuereinheit 60 verbunden, über die die erfassten Intensitäten 31, 32 als Messsignale 47 an die Steuereinheit 60 übertragbar sind. Anhand der Messsignale 47 ist in einem Messbetrieb die Zusammensetzung und/oder ein Eigenschaftsparameter einer zugeführten Stoffprobe 25 ermittelbar.

Mit dem Detektor 80 gemäß FIG 1 ist ein Einstellverfahren 100 durchführbar, durch das die Einfallposition 13 als Betriebsparameter 48 einstellbar ist. In einem ersten Schritt 110 des Einstellverfahrens 100 wird der Detektor 80 funktionstüchtig bereitgestellt und als Stoffprobe 25 eine Kalibrier-Stoffprobe 28 zugeführt, in der deren Stoffproben-Komponenten 26 in bekannten Konzentrationen vorliegen. Basierend auf der Kalibrier-Stoffprobe 28 wird das Strahlenbündel 15 erzeugt und auf die optische Filteranordnung 30 gelenkt. In einem zweiten Schritt 120 werden die erste und zweite Intensität 31, 32 im ersten bzw. zweiten Transmissionsspektrum 41, 42 durch das Erfassungsmittel 50 erfasst. Die erste bzw. zweite Intensität sind von der Größe des ersten bzw. zweiten Anteils 21, 22 der vom Strahlenbündel 15 bestrahlten Fläche 20 abhängig. Weiter werden für die erste und zweite Intensität 31, 32 Sollwerte vorgegeben, die durch die Messbereiche 55, 56 des Erfassungsmittels 50 vorgegeben sind. Das Erfassungsmittel 51 ist dazu ausgebildet, Intensitäten zu erfassen, die innerhalb des ersten und zweiten Messbereichs 55, 56 liegen.

Das Einstellverfahren 130 weist ferner einen dritten Schritt 130 auf, in dem die Einfallposition 13 des Strahlenbündels 15 variiert wird. Hierzu wird das Antriebsmittel 38 über die Steuereinheit 60 angesteuert, die mit dem Spiegel 36 verbunden ist. Hierzu werden von der Steuereinheit 60 über eine kommunikative Datenverbindung 48 an das Antriebsmittel 38 geeignete Steuerbefehle 61 ausgegeben. Durch die Relativbewegung 39 der Einfallposition 13, und damit die Lage der bestrahlten Fläche 20, verändert, und resultierend hieraus auch die Größe des ersten Anteils 21 bzw. des zweiten Anteils 22. Korrespondierend zur Relativbewegung 39 ergibt sich eine Variation 46 der ersten bzw. zweiten Intensität 31, 32. Der dritte Schritt 130 wird solange durchgeführt, bis die erste und zweite Intensität 31, 32 innerhalb ihrer vorgegebenen Sollwerte liegen. Die dann vorliegende Einfallposition 13 wird als Betriebsparameter 48 in einem vierten Schritt 140 des Einstellverfahrens 100 in der Steuereinheit 60 gespeichert. Die optische Filteranordnung 30 wird ist unter Anwendung des so ermittelten Betriebsparameters für einen bestimmungsgemäßen Messbetrieb eingestellt. Das Einstellverfahren 100 ist mittels eines Computerprogrammprodukts 70 durchführbar, das auf der Steuereinheit 60 ausführbar gespeichert ist.

Der Detektor 80 gemäß FIG 1 gehört zu einem nicht näher dargestellten Photometer 85, das als Raman-Photometer ausgebildet sein kann. Die optische Filteranordnung 30 ist in einem Simulationsprogrammprodukt 90 abgebildet, mit der das Betriebsverhalten der optischen Filteranordnung 30 zumindest teilweise nachstellbar ist. Das Simulationsprogrammprodukt 90 ist als Digitaler Zwilling ausgebildet und dazu geeignet, die optische Filteranordnung 30 im Betrieb auf vorliegende Fehlerzustände zu überwachen. Insbesondere sind Messsignale 47, die in einem Messbetrieb zur Steuereinheit 60 geleitet werden, durch das Simulationsprogrammprodukt 90 auf Plausibilität prüfbar.

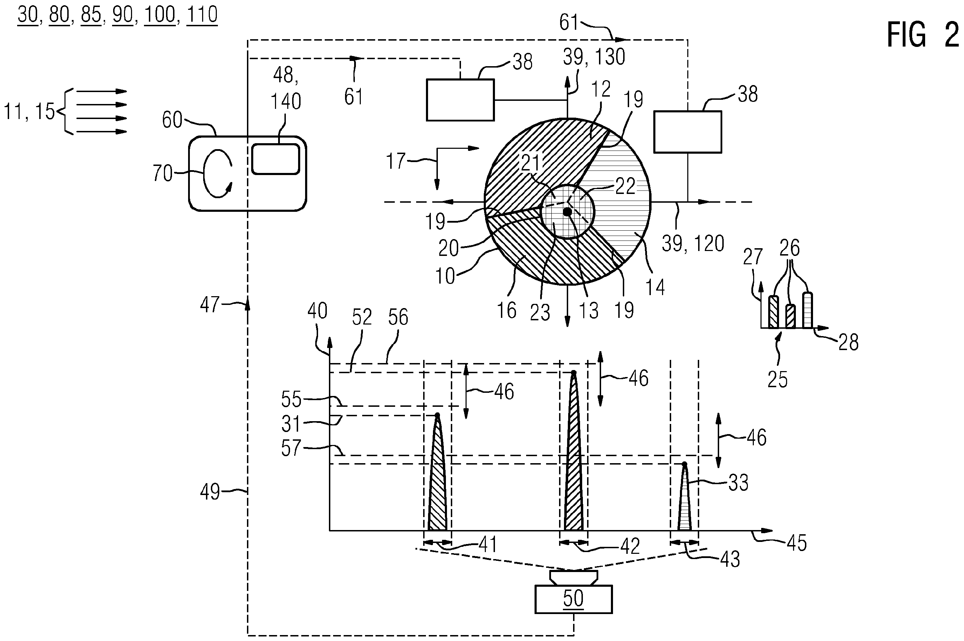

Eine zweite Ausführungsform des beanspruchten Detektors 80 ist in FIG 2 schematisch dargestellt, wobei der Detektor 80 über eine beanspruchte optische Filteranordnung 30 verfügt. Der Detektor 80 dient dazu, eine Zusammensetzung 27 einer Stoffprobe 25 zu ermitteln, die eine Mehrzahl an Stoffproben-Komponenten 26 aufweist. Dazu wird die Stoffprobe 25 angestrahlt und zu einer Lichtemission angeregt, die charakteristisch für ihre Zusammensetzung 27 ist. Die nicht näher gezeigte Lichtemission wird durch einen nicht näher gezeigten Kollimator als Strahlenbündel 15 bereitgestellt. Dadurch liegt eine Lichtquelle 11 vor, die dazu ausgebildet ist, die optische Filteranordnung anzustrahlen. Die optische Filteranordnung 30 umfasst einen Kombinationsfilter 10, auf den das Strahlenbündel 15 einfällt. Das Kombinationsfilter 10 ist kreisförmig ausgebildet und umfasst ein erstes Filterelement 12, ein zweites Filterelement 14, und ein drittes Filterelement 16, die an Stoßkanten 19 paarweise aneinander liegend angeordnet sind. Die Filterelemente 12, 14, 16 sind als Kreissegmente ausgebildet, die in einen Zentralbereich aneinander liegen. Das erste, zweite und dritte Filterelement 12, 14, 16 sind unlösbar, also nicht zerstörungsfrei lösbar, miteinander verbunden, so dass das Kombinationsfilter 10 einstückig ausgebildet ist. Das erste Filterelement 12 weist ein erstes Transmissionsspektrum 41 auf, in dem es für das Strahlenbündel 15 transparent ist. Analog weist das zweite Filterelement 14 ein zweites Transmissionsspektrum 14 auf, in dem es für das Strahlenbündel 15 transparent ist. Weiter analog weist das dritte Filterelement 16 ein dritten Transmissionsspektrum 43 auf, in dem es für das Strahlenbündel 15 transparent ist. Die Transmissionsspektren 41, 42, 43 sind in FIG 2 entlang einer Wellenlängenachse 45 dargestellt. Das Strahlenbündel 15 fällt auf das Kombinationsfilter 10 in einem bestrahlten Fläche 20 ein, der einen ersten Anteil 21 umfasst, der auf dem ersten Filterelement 12 liegt, einen zweiten Anteil 22, der auf dem zweiten Filterelement 14 liegt, und einen dritten Anteil 23, in der auf dem dritten Filterelement 16 liegt. Die Lage der bestrahlten Fläche 20 ist durch eine Einfallposition 13 bestimmt, die in FIG 2 exemplarisch als Kreismittelpunkt dargestellt ist. In Abhängigkeit von einer Intensität des Strahlenbündels 15 im ersten Transmissionsspektrum 41 und der Größe des ersten Anteils 21 ergibt sich eine erste Intensität 31 im ersten Transmissionsspektrum 41. Je höher der erste Anteil 21 ist, umso höher ist die erste Intensität 31. Analog sind eine zweite bzw. dritte Intensität 32, 33 im zweiten bzw. dritten Transmissionsspektrum 42, 43 umso höher, je höher der zweite bzw. dritte Anteil 22, 23 ist. Die Intensitäten 31, 32, 33 sind in FIG 2 schematisch entlang einer vertikalen Intensitätsachse 40 dargestellt. Die Intensitäten 31, 32, 33 in den Transmissionsspektren 41, 42, 43 bilden zusammen ein Gesamttransmissionsspektrum 35 des Kombinationsfilters 10.

Das Kombinationsfilter 10 ist über Antriebsmittel 38 in zwei zueinander senkrechten Richtungen beweglich, ist also translatorisch zweidimensional beweglich. Die Antriebsmittel 38 sind über geeignete Steuerbefehle 61 von einer Steuereinheit 60 vorgebbar antreibbar, und somit die Lage des Kombinationsfilters 10 vorgebbar. Hierdurch ist zwischen dem Strahlenbündel 15 und dem Kombinationsfilter 10 eine Relativbewegung 39 vorgebbar. Korrespondierend hierzu ist eine Einfallposition 13 des Strahlenbündels 15 auf dem Kombinationsfilter 10 vorgebbar. Die Größe des ersten, zweiten und dritten Anteils 21, 22, 23 sind dadurch vorgebbar. Die Relativbewegungen 39 sind in einem ortsfesten Koordinatensystem 17 beschreibbar.

Der Detektor 80 umfasst weiter ein Erfassungsmittel 50, das dazu ausgebildet und angeordnet ist, den ersten, zweiten und dritten Anteil 21, 22, 23 des Strahlenbündels 15 zu erfassen. Das Erfassungsmittels 50 ist dazu ausgebildet, im ersten Transmissionsspektrum 41 eine vorliegende erste Intensität 31 zu erfassen, im zweiten Transmissionsspektrum 42 eine zweite Intensität 32, und im dritten Transmissionsspektrum 43 eine vorliegende dritte Intensität 33. Das Erfassungsmittel 50 ist als Photomultiplier oder als SPAD-Sensor ausgebildet. Weiter ist das Erfassungsmittel 50 über eine kommunikative Datenverbindung 49 mit einer Steuereinheit 60 verbunden, über die die erfassten Intensitäten 31, 32, 33 als Messsignale 47 an die Steuereinheit 60 übertragbar sind. Anhand der Messsignale 47 ist in einem Messbetrieb die Zusammensetzung und/oder ein Eigenschaftsparameter einer zugeführten Stoffprobe 25 ermittelbar.

An dem Detektor 80 gemäß FIG 2 ist ein Einstellverfahren 100 durchgeführt, durch das die Einfallposition 13 als Betriebsparameter 48 eingestellt ist. In einem ersten Schritt 110 des Einstellverfahrens 100 wird der Detektor 80 funktionstüchtig bereitgestellt und als Stoffprobe 25 eine Kalibrier-Stoffprobe 28 zugeführt, in der deren Stoffproben-Komponenten 26 in bekannten Konzentrationen vorliegen. Basierend auf der Kalibrier-Stoffprobe 28 wird das Strahlenbündel 15 erzeugt und auf die optische Filteranordnung 30 gelenkt. In einem zweiten Schritt 120 werden die erste, zweite und dritte Intensität 31, 32, 33 im ersten, zweiten bzw. dritten Transmissionsspektrum 41, 42, 43 durch das Erfassungsmittel 50 erfasst. Die erste, zweite bzw. dritte Intensität 31, 32, 33 sind von der Größe des ersten, zweiten bzw. dritten Anteils 21, 22, 23 der vom Strahlenbündel 15 bestrahlten Fläche 20 abhängig. Weiter sind für die erste, zweite und dritte Intensität 31, 32, 33 Sollwerte vorgegeben, die durch die Messbereiche 55, 56, 57 des Erfassungsmittels 50 definiert sind. Das Erfassungsmittel 50 ist dazu ausgebildet, Intensitäten zu erfassen, die innerhalb des ersten, zweiten und dritten Messbereichs 55, 56, 57 liegen.

Im Einstellverfahren 130 ist ferner ein dritter Schritt 130 durchgeführt, in dem die Einfallposition 13 des Strahlenbündels 15 variiert wird. Hierzu werden die Antriebsmittel 38 über die Steuereinheit 60 angesteuert, durch die das Kombinationsfilter 10 beweglich ist. Hierzu werden von der Steuereinheit 60 über eine kommunikative Datenverbindung 48 an die Antriebsmittel 38 geeignete Steuerbefehle 61 ausgegeben. Durch die zweidimensionale Relativbewegung 39 der Einfallposition 13, und damit die Lage der bestrahlten Fläche 20, und resultierend hieraus auch die Größe des ersten Anteils 21 bzw. des zweiten Anteils 22. Korrespondierend zur Relativbewegung 39 ergibt sich eine Variation 46 der ersten zweiten bzw. dritten Intensität 31, 32, 33. Der dritte Schritt 130 wird so lange durchgeführt, bis die erste, zweite und dritte Intensität 31, 32, 33 innerhalb ihrer vorgegebenen Sollwerte, also der Messbereiche 55, 56, 57 liegen. Die dann vorliegende Einfallposition 13 wird als Betriebsparameter 48 in einem vierten Schritt 140 des Einstellverfahrens 100 in der Steuereinheit 60 gespeichert. Die optische Filteranordnung 30 wird ist unter Anwendung des so ermittelten Betriebsparameters für einen bestimmungsgemäßen Messbetrieb eingestellt. Das Einstellverfahren 100 ist mittels eines Computerprogrammprodukts 70 durchführbar, das auf der Steuereinheit 60 ausführbar gespeichert ist. Alternativ kann die Einfallposition 13 des Strahlenbündels 15 von Hand variiert werden. Wenn bei der vorliegenden Einfallposition 13 die erste, zweite und dritte Intensitäten 31, 32, 33 ihre Sollwerte erreichen, können das Kombinationsfilter 10 und/oder eine Umlenkung des Strahlenbündels 15 fixiert werden und so die dabei vorliegende Einfallposition 13 festgehalten werden.

Der Detektor 80 gemäß FIG 2 gehört zu einem nicht näher dargestellten Photometer 85, das als Raman-Photometer ausgebildet sein kann. Die optische Filteranordnung 30 ist in einem Simulationsprogrammprodukt 90 abgebildet, mit der das Betriebsverhalten der optischen Filteranordnung 30 zumindest teilweise nachstellbar ist. Das Simulationsprogrammprodukt 90 ist als Digitaler Zwilling ausgebildet und dazu geeignet, die optische Filteranordnung 30 im Betrieb auf vorliegende Fehlerzustände zu überwachen. Insbesondere sind Messsignale 47, die in einem Messbetrieb zur Steuereinheit 60 geleitet werden, durch das Simulationsprogrammprodukt 90 auf Plausibilität prüfbar.

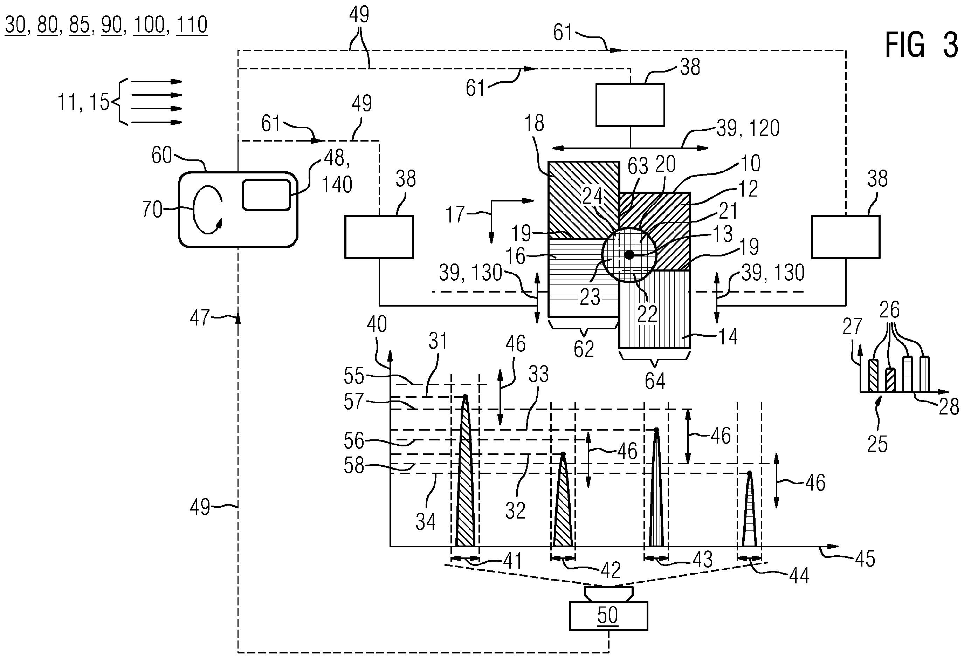

FIG 3 zeigt schematisch eine dritte Ausführungsform des beanspruchten Detektors 80, wobei der Detektor 80 über eine beanspruchte optische Filteranordnung 30 verfügt. Der Detektor 80 dient dazu, eine Zusammensetzung 27 und/oder einen Eigenschaftsparameter einer Stoffprobe 25 zu ermitteln, die eine Mehrzahl an Stoffproben-Komponenten 26 aufweist. Dazu wird die Stoffprobe 25 angestrahlt und zu einer Lichtemission angeregt, die charakteristisch für ihre Zusammensetzung 27 ist. Alternativ oder ergänzend kann die Stoffprobe durchleuchtet werden und die vorliegende Transmission detektiert werden. Dadurch ist beispielsweise eine Chemolumineszenz der Stoffprobe auswertbar. Die nicht näher gezeigte Lichtemission wird durch einen nicht näher gezeigten Kollimator als Strahlenbündel 15 bereitgestellt. Dadurch liegt eine Lichtquelle 11 vor, die dazu ausgebildet ist, die optische Filteranordnung anzustrahlen. Die optische Filteranordnung 30 umfasst einen Kombinationsfilter 10, auf den das Strahlenbündel 15 einfällt. Das Kombinationsfilter 10 umfasst ein erstes Filterelement 12, ein zweites Filterelement 14, ein drittes Filterelement 16, und ein viertes Filterelement 18 umfasst, die an Stoßkanten 19 paarweise aneinander liegend angeordnet sind. Das erste und zweite Filterelement 21, 22 bilden eine erste Filtergruppe 62 und sind unlösbar, also nicht zerstörungsfrei lösbar, miteinander verbunden. Das dritte und vierte Filterelement 23, 24 bilden eine zweite Filtergruppe 64 und sind unlösbar miteinander verbunden.

Das erste Filterelement 12 weist ein erstes Transmissionsspektrum 41 auf, in dem es für das Strahlenbündel 15 transparent ist. Analog weist das zweite Filterelement 14 ein zweites Transmissionsspektrum 14 auf, in dem es für das Strahlenbündel 15 transparent ist. Weiter analog weisen das dritte bzw. vierte Filterelement 16, 18 ein drittes bzw. viertes Transmissionsspektrum 43, 44 auf, in dem es für das Strahlenbündel 15 transparent ist. Die Transmissionsspektren 41, 42, 43, 44 sind in FIG 3 entlang einer Wellenlängenachse 45 dargestellt. Das Strahlenbündel 15 fällt auf das Kombinationsfilter 10 auf einer bestrahlten Fläche 20 ein, der einen ersten Anteil 21 umfasst, der auf dem ersten Filterelement 12 liegt, einen zweiten Anteil 22, der auf dem zweiten Filterelement 14 liegt, einen dritten Anteil 23, in der auf dem dritten Filterelement 16 liegt, und einen vierten Anteil 24, der auf dem vierten Filterelement 18 liegt. Die Lage der bestrahlten Fläche 20 ist durch eine Einfallposition 13 bestimmt, die in FIG 3 exemplarisch als Kreismittelpunkt dargestellt ist. In Abhängigkeit von einer Intensität des Strahlenbündels 15 im ersten Transmissionsspektrum 41 und der Größe des ersten Anteils 21 ergibt sich eine erste Intensität 31 im ersten Transmissionsspektrum 41. Je höher der erste Anteil 21 ist, umso höher ist die erste Intensität 31. Analog sind eine zweite, dritte bzw. vierte Intensität 32, 33, 34 im zweiten, dritten bzw. vierten Transmissionsspektrum 42, 43, 44 umso höher, je höher der zweite, dritte bzw. vierte Anteil 22, 23, 24 ist. Die Intensitäten 31, 32, 33, 34 sind in FIG 3 schematisch entlang einer vertikalen Intensitätsachse 40 dargestellt. Die Intensitäten 31, 32, 33, 34 in den Transmissionsspektren 41, 42, 43, 44 bilden zusammen ein Gesamttransmissionsspektrum 35 des Kombinationsfilters 10.

Die erste und zweite Filtergruppe 62, 64 sind entlang aneinander liegender Kanten, die einen Kontaktbereich 63 bilden, relativ zueinander beweglich. Diese Richtung ist in FIG 3 als vertikale Richtung dargestellt. Dazu sind die erste und zweite Filtergruppe 61, 64 jeweils mit einem geeigneten Antriebsmittel 38 verbunden. Weiter sind die erste und zweite Filtergruppe 62, 64 zusammen entlang einer Richtung im Wesentlichen senkrecht zum Kontaktbereich 63 beweglich. Diese Richtung ist in FIG 3 horizontal dargestellt. Durch Bewegen der ersten und zweiten Filtergruppe 62, 64 sind somit der erste, zweite, dritte und vierte Anteil 21, 22, 23, 24 vorgebbar, auf die das Strahlenbündel 15, also die bestrahlte Fläche 20, einfällt. Die Anteile 21, 22, 23, 24, und damit die korrespondierenden Intensitäten 31, 32, 33, 34 sind folglich vorgebbar. Das Vorgeben der Anteile ist somit im Wesentlichen über eine zweidimensionale Bewegung, also eine zweidimensionale Parameter-Variation, durchführbar, was lediglich ein Minimum an Rechenleistung erfordert. Alternativ kann dieser Schritt auch von Hand durchgeführt werden, was eine schnelle Umsetzung dieses Schritts erlaubt.

Die Antriebsmittel 38 sind über geeignete Steuerbefehle 61 von einer Steuereinheit 60 vorgebbar antreibbar, und somit die Lage des Kombinationsfilters 10 vorgebbar. Hierdurch ist zwischen dem Strahlenbündel 15 und dem Kombinationsfilter 10, also seinen Filterelementen 21, 22, 23, 24, eine Relativbewegung 39 vorgebbar. Die Relativbewegungen 39 sind in einem ortsfesten Koordinatensystem 17 beschreibbar.

Der Detektor 80 umfasst weiter ein Erfassungsmittel 50, das dazu ausgebildet und angeordnet ist, den ersten, zweiten, dritten bzw. vierten Anteil 21, 22, 23 des Strahlenbündels 15 zu erfassen. Das Erfassungsmittels 50 ist dazu ausgebildet, im ersten Transmissionsspektrum 41 eine vorliegende erste Intensität 31 zu erfassen, im zweiten, dritten und vierten Transmissionsspektrum 42, 43 eine zweite, dritte und vierte Intensität 32, 33. Das Erfassungsmittel 50 ist als Photomultiplier oder als SPAD-Sensor ausgebildet. Weiter ist das Erfassungsmittel 50 über eine kommunikative Datenverbindung 49 mit einer Steuereinheit 60 verbunden, über die die erfassten Intensitäten 31, 32, 33, 34 als Messsignale 47 an die Steuereinheit 60 übertragbar sind. Anhand der Messsignale 47 ist in einem Messbetrieb die Zusammensetzung einer zugeführten Stoffprobe 25 ermittelbar.

An dem Detektor 80 gemäß FIG 3 wird ein Einstellverfahren 100 durchgeführt, durch das die Einfallposition 13 als Betriebsparameter 48 eingestellt wird. In einem ersten Schritt 110 des Einstellverfahrens 100 wird der Detektor 80 funktionstüchtig bereitgestellt und als Stoffprobe 25 eine Kalibrier-Stoffprobe 28 zugeführt, in der deren Stoffproben-Komponenten 26 in bekannten Konzentrationen vorliegen. Basierend auf der Kalibrier-Stoffprobe 28 wird das Strahlenbündel 15 erzeugt und auf die optische Filteranordnung 30 gelenkt. In einem zweiten Schritt 120 werden die erste, zweite, dritte und vierte Intensität 31, 32, 33, 34 im ersten, zweiten, dritten bzw. vierten Transmissionsspektrum 41, 42, 43, 44 durch das Erfassungsmittel 50 erfasst. Die erste, zweite, dritte bzw. vierte Intensität 31, 32, 33, 34 sind von der Größe des ersten, zweiten, dritten bzw. vierten Anteils 21, 22, 23, 24 der vom Strahlenbündel 15 bestrahlten Fläche 20 abhängig. Weiter werden für die erste, zweite, dritte bzw. vierte Intensität 31, 32, 33, 34 Sollwerte vorgegeben, die durch die Messbereiche 55, 56, 57, 58 des Erfassungsmittels 50 definiert sind. Das Erfassungsmittel 50 ist dazu ausgebildet, Intensitäten zu erfassen, die innerhalb des ersten, zweiten, dritten und vierten Messbereichs 55, 56, 57, 58 liegen.

Im Einstellverfahren 130 ist ferner ein dritter Schritt 130 durchgeführt, in dem die Einfallposition 13 des Strahlenbündels 15 variiert wird. Hierzu werden die Antriebsmittel 38 über die Steuereinheit 60 angesteuert, durch die das Kombinationsfilter 10 beweglich ist. Hierzu werden von der Steuereinheit 60 über eine kommunikative Datenverbindung 48 an die Antriebsmittel 38 geeignete Steuerbefehle 61 ausgegeben. Durch die zweidimensionale Relativbewegung 39 der Einfallposition 13, und damit die Lage der bestrahlten Fläche 20, und resultierend hieraus auch die Größe des ersten Anteils 21, des zweiten Anteils 22, des dritten Anteils 23 und des vierten Anteils 24.

Korrespondierend zur Relativbewegung 39 ergibt sich eine Variation 46 der ersten, zweiten, dritten bzw. vierten Intensität 31, 32, 33, 34. Der dritte Schritt 130 wird so lange durchgeführt, bis die erste, zweite, dritte und vierte Intensität 31, 32, 33, 34 innerhalb ihrer vorgegebenen Sollwerte, also der Messbereiche 55, 56, 57, 58 liegen. Die dann vorliegende Einfallposition 13 wird als Betriebsparameter 48 in einem vierten Schritt 140 des Einstellverfahrens 100 in der Steuereinheit 60 gespeichert. Die optische Filteranordnung 30 wird ist unter Anwendung des so ermittelten Betriebsparameters für einen bestimmungsgemäßen Messbetrieb eingestellt. Das Einstellverfahren 100 ist mittels eines Computerprogrammprodukts 70 durchführbar, das auf der Steuereinheit 60 ausführbar gespeichert ist.

Der Detektor 80 gemäß FIG 3 gehört zu einem nicht näher dargestellten Photometer 85, das als Raman-Photometer ausgebildet sein kann. Die optische Filteranordnung 30 ist in einem Simulationsprogrammprodukt 90 abgebildet, mit der das Betriebsverhalten der optischen Filteranordnung 30 zumindest teilweise nachstellbar ist. Das Simulationsprogrammprodukt 90 ist als Digitaler Zwilling ausgebildet und dazu geeignet, die optische Filteranordnung 30 im Betrieb auf vorliegende Fehlerzustände zu überwachen. Insbesondere sind Messsignale 47, die in einem Messbetrieb zur Steuereinheit 60 geleitet werden, durch das Simulationsprogrammprodukt 90 auf Plausibilität prüfbar.

## Patentansprüche

1. Optische Filteranordnung (30) zum Filtern eines einfallenden Strahlenbündels (15), umfassend eine Lichtquelle (11) und ein optisches Kombinationsfilter (10) mit zumindest einem ersten Filterelement (12) mit einem ersten Transmissionsspektrum (41) und einem zweiten Filterelement (14) mit einem zweiten Transmissionsspektrum (42), **dadurch gekennzeichnet, dass** die optische Filteranordnung (30) dazu ausgebildet ist, zu einem Einstellen eines Gesamttransmissionsspektrums (35) des Kombinationsfilters (10) zumindest einen auf dem ersten Filterelement (12) einfallenden ersten Anteil (21) des einfallenden Strahlenbündels (15) vorgebbar einzustellen.

2. Optische Filteranordnung (30) nach Anspruch 1, **dadurch gekennzeichnet, dass** die Lichtquelle (11) und/oder zumindest eines der Filterelemente (12, 14, 16, 18) des Kombinationsfilters (10) zu einer Relativbewegung (39) zueinander ausgebildet sind.

3. Optische Filteranordnung (30) nach Anspruch 1 oder 2, **dadurch gekennzeichnet, dass** die optische Filteranordnung (30) zumindest einen Spiegel (36) zum Umlenken des Strahlenbündels (15) aufweist.

4. Optische Filteranordnung (30) nach einem der Ansprüche 1 bis 3, **dadurch gekennzeichnet, dass** das erste und zweite Filterelement (12, 14) benachbart zueinander angeordnet sind, insbesondere an einer Stoßkante (19) aneinander liegend angeordnet sind.

5. Optische Filteranordnung (30) nach einem der Ansprüche 1 bis 4, **dadurch gekennzeichnet, dass** die optische Filteranordnung (30) zumindest auch ein drittes Filterelement (16) mit einem dritten Transmissionsspektrum (33) und/oder ein viertes Filterelement (18) mit einem vierten Transmissionsspektrum (44) aufweist.

6. Optische Filteranordnung (30) nach Anspruch 5, **dadurch gekennzeichnet, dass** das erste und zweite Filterelement (12, 14) eine erste Filtergruppe (62) bilden und das dritte und vierte Filterelement (16, 18) eine zweite Filtergruppe (64) bilden, die aneinander anliegend angeordnet sind und entlang eines Kontaktbereichs (63) relativ zueinander beweglich ausgebildet sind.

7. Optische Filteranordnung (30) nach einem der Ansprüche 1 bis 6, **dadurch gekennzeichnet, dass** das Kombinationsfilter (10) einstückig ausgebildet ist.

8. Optische Filteranordnung (30) nach Anspruch 6 oder 7, **dadurch gekennzeichnet, dass** das Kombinationsfilter (10) einen Zentralbereich aufweist, in dem zumindest das erste, zweite und dritte Filterelement (12, 14, 16) aneinander liegen.

9. Optische Filteranordnung (30) nach einem der Ansprüche 1 bis 8, **dadurch gekennzeichnet, dass** die Filterelemente (12, 14, 16, 18) als aneinander liegende Kreissegmente oder aneinander liegende Keilstücke ausgebildet sind.

10. Optische Filteranordnung (30) nach einem der Ansprüche 1 bis 9, **dadurch gekennzeichnet, dass** die optische Filteranordnung (30) einen Kollimator umfasst, über den das Strahlenbündel (15) bereitgestellt wird.

11. Optische Filteranordnung (30) nach einem der Ansprüche 1 bis 10, **dadurch gekennzeichnet, dass** das erste, zweite, dritte und/oder vierte Filterelement (12, 14, 16, 18) jeweils als Kurzpassfilter, als Langpassfilter, als Bandpassfilter oder als Notch-Filter ausgebildet ist.

12. Detektor (80) zum Erfassen eines Transmissionsspektrums (31, 32, 33, 34) eines einfallenden Strahlenbündels (15), umfassend eine optische Filteranordnung (30) und ein damit gekoppeltes Erfassungsmittel (50), **dadurch gekennzeichnet, dass** die optische Filteranordnung (30) nach einem der Ansprüche 1 bis 11 ausgebildet ist.

13. Photometer (85) zum Ermitteln einer Zusammensetzung (27) einer Stoffprobe (25), umfassend eine Messkammer zum Anregen einer Lichtemission der Stoffprobe (25), wobei die Messkammer mit einem Detektor (80) gekoppelt ist, **dadurch gekennzeichnet, dass** der Detektor (80) nach Anspruch 12 ausgebildet ist.

14. Verfahren zum Simulieren eines Betriebsverhaltens einer optischen Filteranordnung (30), umfassend die Schritte:
a) Bereitstellen eines Datensatzes, durch den eine Funktionsweise zumindest eines Teils der zu simulierenden optischen Filteranordnung (30) nachstellbar ist;
b) Vorgeben zumindest einer Betriebsbedingung, die das zu simulierende Betriebsverhalten charakterisiert;
c) Ausführen eines Simulationsprogrammprodukts (90), das dazu ausgebildet ist, das Betriebsverhalten der optischen Filteranordnung (30) anhand des Datensatzes und der zumindest einen Betriebsbedingung nachzustellen und zumindest einen Betriebskennwert zu ermitteln;
d) Ausgeben des zumindest einen Betriebskennwerts an einen Benutzer und/oder eine Datenschnittstelle;
**dadurch gekennzeichnet, dass** die optische Filteranordnung (30) nach einem der Ansprüche 1 bis 11 ausgebildet ist.

15. Simulationsprogrammprodukt (90) zum Simulieren eines Betriebsverhaltens einer optischen Filteranordnung (30), **dadurch gekennzeichnet, dass** das Betriebsverhalten durch ein Verfahren nach Anspruch 14 simuliert wird.
